# EUROPEAN PATENT SPECIFICATION

(11) **EP 3 604 053 B1**
(45) Date of publication and mention of the grant of the patent: **28.04.2021**
(21) Application number: 19186318.2
(22) Date of filing: 15.07.2019
(51) Int. Cl.: B60S 1/40, B60S 1/38, B60S 1/34

(54) **COUPLING STRUCTURE OF WIPER ARM**
KOPPLUNGSSTRUKTUR EINES WISCHERARMS
STRUCTURE DE COUPLAGE DE BRAS D'ESSUIE-GLACE

(30) Priority: 30.07.2018 JP 2018142244
(43) Date of publication of application: 05.02.2020
(73) Proprietor: Mitsuba Corporation, Kiryu-shi Gunma 376-8555 (JP)
(72) Inventor: SUGIYAMA, Tsuneo, Gunma, 376-8555 (JP); TAMURA, Kazuhisa, Gunma, 376-8555 (JP)
(74) Representative: Becker & Kurig Partnerschaft Patentanwälte PartmbB

(56) References cited:
- EP-A1- 3 330 137
- DE-A1-102012 110 859
- FR-A1- 3 022 201

## Description

### BACKGROUND OF THE DISCLOSURE

### Technical Field

The disclosure relates to a blade holding member holding a wiper blade and a coupling structure of a wiper arm.

### Description of Related Art

A wiper apparatus is installed in a vehicle such as an automobile. A wiper apparatus includes a wiper motor that serves as a driving source, a wiper arm that oscillates when the wiper motor is driven, and a wiper blade that is mounted on a distal end side of the wiper arm. The wiper blade is held by a blade holding member, and the blade holding member is coupled to the wiper arm. When the wiper motor is driven, the wiper blade performs reciprocating wiping operations on a wiping surface of a window glass of an automobile or the like.

Patent Document 1 (Japanese Laid-Open Publication No. 2015-214181) discloses a coupling structure of a wiper arm and a wiper blade. The foregoing Patent Document 1 discloses that a cylindrical portion forming a coupling shaft can be put in a locked posture or an attachment/detachment posture by causing a lever member, which oscillates with respect to a holding member holding a blade rubber, to oscillate. It also discloses that design of the wiper blade can be improved when the cylindrical portion is in the locked posture, and attachment/detachment work can be easily performed with less effort when the cylindrical portion is in the attachment/detachment posture.

FR 3 022 201 A1 discloses a wiper arm for a motor vehicle rear window wiper system, comprising a lower arm extending longitudinally between a first end and a second end, the first end being arranged to be secured to one end of a connecting piece rotatably connected to a drive shaft of the blade arm, this end of the connecting piece being off-axis with respect to the drive shaft, and a upper arm extending between a third end and a fourth end, comprising a blade hook, remote from the third end, and adapted to be attached to a rear window wiper blade, wherein the third end and the second end are arranged so that the upper arm can be attached by the third end to the second end of the lower arm.

### SUMMARY OF THE DISCLOSURE

However, the coupling structure of the wiper arm and the wiper blade disclosed in the foregoing Patent Document 1 is a structure in which the wiper arm and the wiper blade are coupled to each other at one place when they are assembled.

Therefore, when the length of the wiper blade is changed, the position of a coupling portion on a shank side also changes. Thus, there is a problem that when a coupling place is set at one place, there is a need to change the shape on the shank side in accordance with the length of the wiper blade.

The disclosure provides a coupling structure of a wiper arm which is applicable to wiper blades of a plurality of types having different lengths.

According to the invention, there is provided a coupling structure of a wiper arm coupled to a blade holding member in an attachable/detachable manner on the wiper arm. The coupling structure includes the wiper arm, a coupling member that is fixed to an arm shank constituting the wiper arm, and the blade holding member that engages with the coupling member and holds a wiper blade. The coupling member is positioned between the arm shank and the blade holding member. The arm shank includes a coupling engagement portion capable of fixing the coupling member at any position in a longitudinal direction of the arm shank.

In the invention, the arm shank includes a pair of inner wall surfaces facing each other. The coupling engagement portion engaging with the coupling member is formed on each of the inner wall surfaces. The coupling engagement portion is continuously connected in the longitudinal direction of the arm shank.

In the invention, the coupling engagement portion is a rail portion protruding from the inner wall surface of the arm shank. The coupling member has a protruding portion engaging with the rail portion.

In the embodiment of the disclosure, the coupling structure may include a weld portion joining a portion of the coupling engagement portion and a portion of the coupling member to each other.

In the embodiment of the disclosure, the coupling member may include an extended portion. The extended portion may be disposed separately from the protruding portion with a gap therebetween. The rail portion of the arm shank may be disposed between the protruding portion and the extended portion in the coupling member.

According to the disclosure, since the coupling structure includes the coupling member to connect the arm shank of the wiper arm and the blade holding member, the blade holding member can be fixed at a plurality of places in the longitudinal direction of the arm shank via the coupling member. It is possible to realize a wiper arm of one kind which can be attached to wiper blades of a plurality of types having different lengths. That is, it is possible to provide a coupling structure of a wiper arm which is applicable to wiper blades of a plurality of types having different lengths.

### BRIEF DESCRIPTION OF THE DRAWINGS

FIG. 1 is a perspective view illustrating a coupling structure of a wiper arm of the disclosure.
FIG. 2 is a perspective view illustrating the wiper arm used in the coupling structure of the wiper arm in FIG. 1.
FIG. 3 is a perspective view illustrating a structure of an arm shank of the wiper arm in FIG. 2.
FIG. 4 is a cross-sectional view cut along line A-A in FIG. 2.
FIG. 5 is a perspective view illustrating a coupling member of Embodiment 1 embedded in the coupling structure of the wiper arm in FIG. 1.
FIG. 6 is a plan view of the coupling member in FIG. 5.
FIG. 7 is a cross-sectional view illustrating a joint structure of the arm shank and the coupling member cut along line A-A in FIG. 2.
FIG. 8 is a perspective view illustrating a fixing method for the coupling member in the coupling structure of the wiper arm of Embodiment 1.
FIG. 9 is a perspective view partially illustrating an engagement structure of the coupling member and a blade holding member in the coupling structure of the wiper arm of Embodiment 1.
FIG. 10(a) is a perspective view of a wiper arm having a long wiper blade, and FIG. 10(b) is a plan view illustrating a wiping region of the wiper blade in FIG. 10(a).
FIG. 11(a) is a perspective view of a wiper arm having a short wiper blade, and FIG. 11(b) is a plan view illustrating a wiping region of the wiper blade in FIG. 11(a).
FIG. 12 is a perspective view illustrating a structure of an arm shank of a wiper arm of Embodiment 2.
FIG. 13 is a perspective view illustrating a coupling member embedded in a coupling structure of the wiper arm of Embodiment 2.
FIG. 14 is a perspective view partially illustrating a mounting method for the coupling member in the coupling structure of the wiper arm of Embodiment 2.
FIG. 15 is a perspective view partially illustrating details of a mounting structure of the coupling member of Embodiment 2.
FIG. 16 is a perspective view partially illustrating an engagement structure of the coupling member and a blade holding member in the coupling structure of the wiper arm of Embodiment 2.
FIG. 17 is a perspective view illustrating a structure of an arm shank of a wiper arm of Embodiment 3.
FIG. 18 is a perspective view illustrating a coupling member embedded in a coupling structure of the wiper arm of Embodiment 3.
FIG. 19 is a perspective view illustrating a mounting method for the coupling member in the coupling structure of the wiper arm of Embodiment 3.
FIG. 20 is a side view partially illustrating a press-fitting method for the coupling member of Embodiment 3.
FIG. 21 is a perspective view partially illustrating a partially broken structure after the coupling member of Embodiment 3 is mounted.
FIG. 22 is a perspective view partially illustrating an engagement structure of the coupling member and a blade holding member in the coupling structure of the wiper arm of Embodiment 3.

### DESCRIPTION OF THE EMBODIMENTS

Hereinafter, embodiments of the disclosure will be described in detail using the drawings.

### (Embodiment 1)

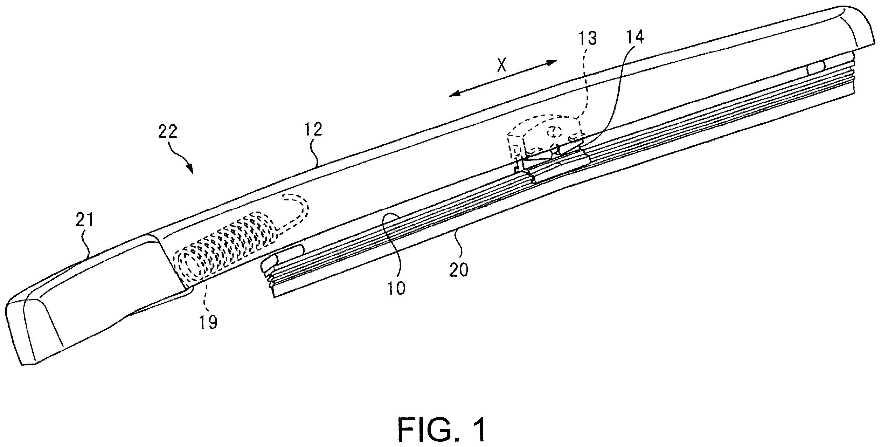

FIG. 1 is a perspective view illustrating a coupling structure of a wiper arm of the disclosure.

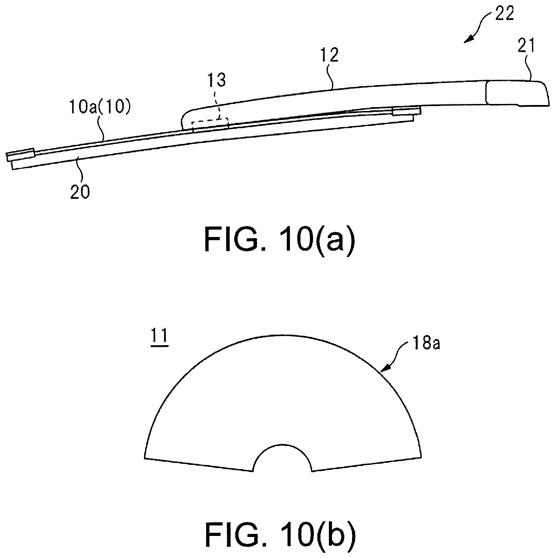

For example, the coupling structure of a wiper arm 22 illustrated in FIG. 1 forms a rear wiper apparatus (not illustrated) wiping a wiping surface of a rear glass (refer to FIG. 10) 11 provided in a vehicle such as an automobile. The coupling structure of the wiper arm 22 has a slender arm shank 12 constituting the wiper arm 22, an adaptor (coupling member) 13, and a blade holding member 14 holding a wiper blade 10. The wiper arm 22 is constituted of the arm shank 12, and an arm head 21 pivotably supporting the arm shank 12.

In addition, the wiper blade 10 is pivotably coupled to a place from a portion near a middle part in a longitudinal direction X of the arm shank 12 to a portion near a distal end part. An output shaft (not illustrated) of a wiper motor forming the rear wiper apparatus is fixed to a proximal end side of the wiper arm 22.

When a wiper switch provided inside a cabin or the like is turned on, the output shaft of the wiper motor rotates in normal and reverse directions, and the wiper arm 22 oscillates. Accordingly, a blade rubber 20 performs reciprocating wiping operations within a predetermined wiping range on the rear glass 11, thereby wiping off rain water or the like which has adhered to the wiping surface of the rear glass 11.

The wiper arm 22 is formed to have a rod shape through injection molding performed with a resin material such as a plastic, and the thickness of the wiper arm 22 on a distal end side is formed to be thinner than the thickness on the proximal end side. More specifically, the wiper arm 22 is formed to have a tapered shape which is gradually thinned from its proximal end side toward the distal end side. Accordingly, design of the wiper arm 22 is improved.

The wiper arm 22 and the blade holding member 14 are coupled to each other via the adaptor 13 serving as a coupling member. That is, the adaptor 13 is fixed at a predetermined position in the longitudinal direction X of the arm shank 12 of the wiper arm 22 and is positioned between the arm shank 12 and the blade holding member 14. In addition, the blade holding member 14 engages with the adaptor 13 in a pivotable and attachable/detachable manner.

The blade holding member 14 holds the wiper blade 10 in which the blade rubber 20 is provided, in a clasping manner.

In addition, a pressing force acts on the arm shank 12 of the wiper arm 22 toward the rear glass 11 in a direction in which the arm shank 12 is laid. Therefore, the wiper blade 10 does not fall off of the wiper arm 22 during reciprocating wiping operations of the wiper blade 10. The foregoing pressing force is generated due to a spring force of a pulling spring 19 provided on the proximal end side of the arm shank 12.

Here, the arm shank 12 includes a coupling engagement portion capable of fixing the adaptor 13 at any position in the longitudinal direction X of the arm shank 12. Therefore, in the coupling structure of the wiper arm 22 of Embodiment 1, the adaptor 13 to be fixed at a predetermined position in the longitudinal direction X of the arm shank 12 of the slender wiper arm 22 can be fixed at an arbitrary position in the longitudinal direction X thereof.

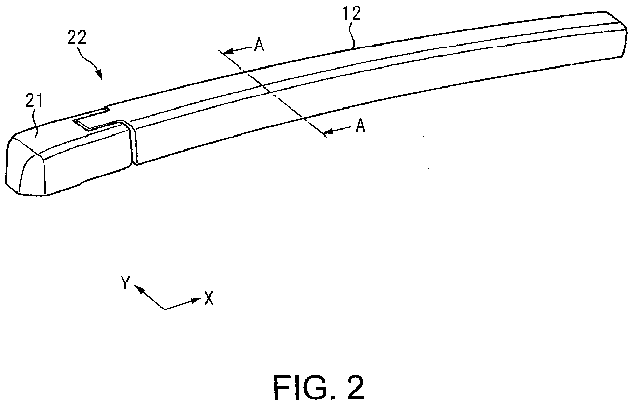

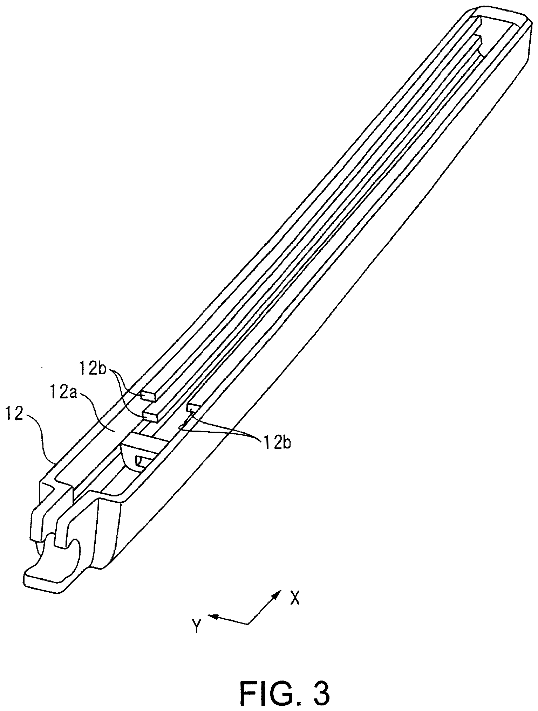

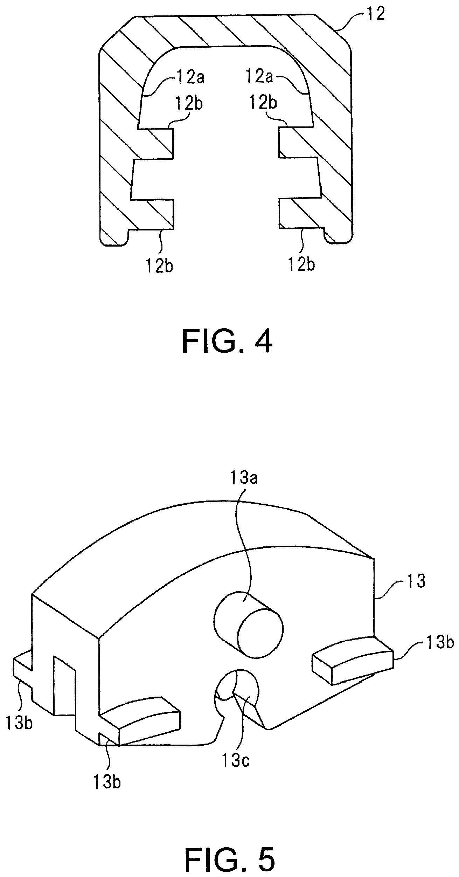

A structure of the arm shank used in the coupling structure of the wiper arm of Embodiment 1 will be described using FIGS. 2 to 4. FIG. 2 is a perspective view illustrating the wiper arm used in the coupling structure of the wiper arm in FIG. 1. FIG. 3 is a perspective view illustrating a structure of an arm shank of the wiper arm in FIG. 2. FIG. 4 is a cross-sectional view cut along line A-A in FIG. 2.

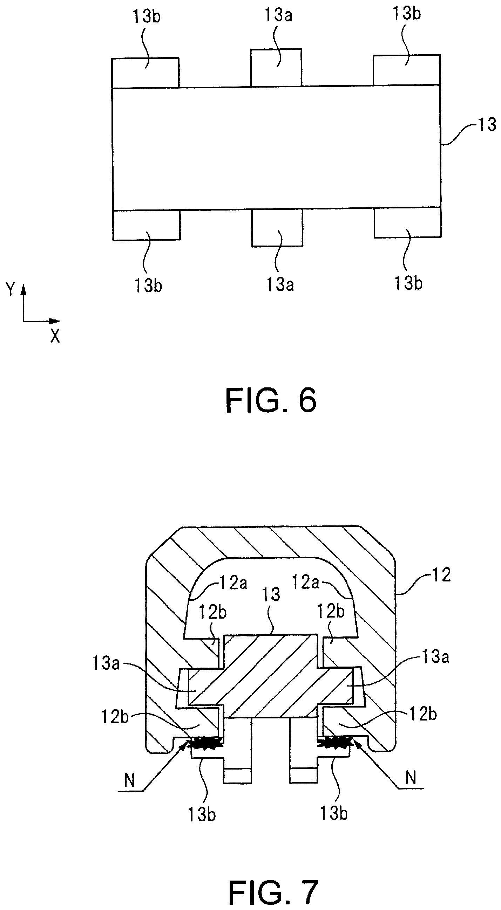

In the arm shank 12 in the wiper arm 22, the shape of a cross section cut in a Y-direction orthogonal to the longitudinal direction X of the arm shank 12 illustrated in FIG. 2 is substantially a U-shape as illustrated in FIG. 4. The arm shank 12 includes a pair of inner wall surfaces 12a facing each other. The coupling engagement portion engaging with the adaptor (coupling member) 13 is formed on the inner wall surface 12a of the arm shank 12, and the adaptor 13 is mounted on an opening side (lower portion side in FIG. 4) having the U-shape as illustrated in FIG. 7 (which will be described below).

The coupling engagement portion of Embodiment 1 is rail portions 12b formed to protrude inward from the inner wall surface 12a of the arm shank 12 illustrated in FIG. 3, and these rail portions 12b are formed to be continuously connected in the longitudinal direction X of the wiper arm 22. That is, as illustrated in FIGS. 3 and 4, a cross-sectional shape is a U-shape, and the rail portions 12b are continuously formed on each of the pair of inner wall surfaces 12a facing each other, in other words, the rail portion 12b is a guide portion for the adaptor 13 moving in the longitudinal direction X. In addition, the rail portions 12b are formed vertically in two stages when the U-shaped opening side is referred to as the lower side.

Next, using FIGS. 5 and 6, a structure of the adaptor (coupling member) 13 attached to the arm shank 12 will be described. FIG. 5 is a perspective view illustrating a coupling member of Embodiment 1 embedded in the coupling structure of the wiper arm in FIG. 1. FIG. 6 is a plan view of the coupling member in FIG. 5.

The adaptor 13 illustrated in FIG. 5 engages with the arm shank 12 illustrated in FIG. 2 and can slidably move in the longitudinal direction X inside the wiper arm 22. That is, on the right side and the left side toward the inner wall surfaces 12a of the arm shank 12 facing each other in FIG. 4 in the structure illustrated FIG. 5, a protruding portion 13a engaging with the rail portion 12b on the lower stage side on each of the inner wall surfaces 12a on the right side and the left side of the arm shank 12 is provided on both side surfaces of the adaptor 13.

In addition, as illustrated in FIGS. 5 and 6, the adaptor 13 includes extended portions (portions) 13b formed separately from the protruding portion 13a with a gap therebetween on both side surfaces thereof. The two extended portions 13b are provided at the same height on each of the side surfaces of the adaptor 13 of Embodiment 1.

When the adaptor 13 is mounted in the arm shank 12, the right and left protruding portions 13a of the adaptor 13 are guided to the rail portions 12b on the lower stage side provided on the inner wall surfaces 12a of the arm shank 12 and the protruding portions 13a engage with the rail portions 12b, so that the adaptor 13 can slidably move on the rail portions 12b.

In addition, a circular cut-out portion 13c is formed below the protruding portion 13a on both side surfaces of the adaptor 13. The cut-out portion 13c is provided below the protruding portion 13a on both side surfaces of the adaptor 13. The blade holding member 14 holding the wiper blade 10 illustrated in FIG. 1 is pivotably fitted into the cut-out portions 13c.

When the adaptor 13 is mounted in the arm shank 12, the rail portion 12b of the arm shank 12 on the lower stage side is disposed between the protruding portion 13a and the extended portion 13b of the adaptor 13 as illustrated in FIG. 7 (which will be described below).

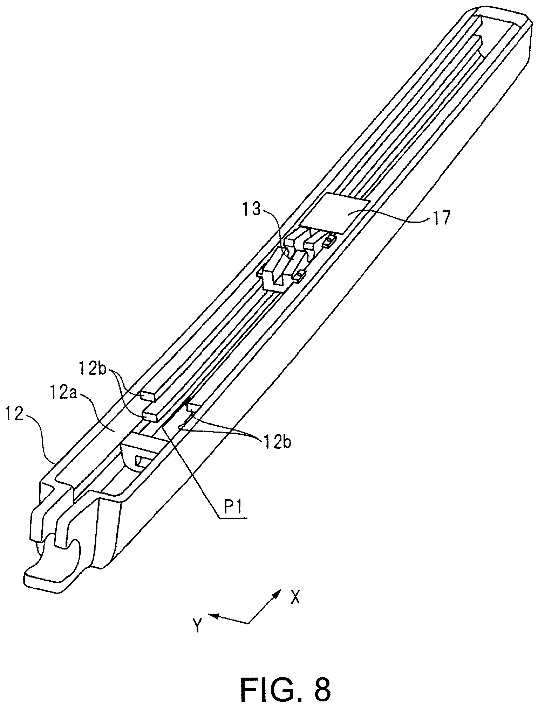

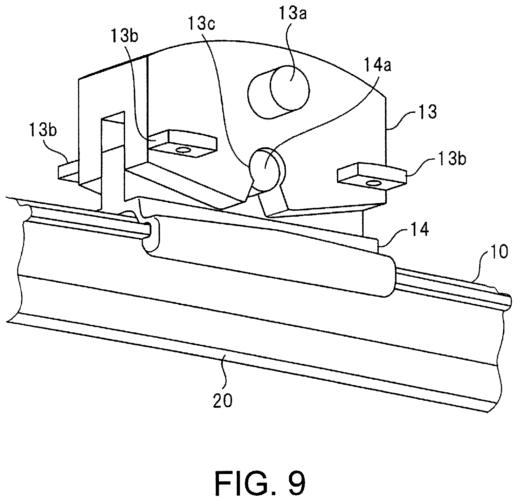

Next, a mounting method for the adaptor 13 with respect to the wiper arm 22, a fixing method for the adaptor 13, and a structure after a wiper blade is attached will be described using FIGS. 7 to 9. FIG. 7 is a cross-sectional view illustrating a joint structure of the arm shank and the coupling member cut along line A-A in FIG. 2. FIG. 8 is a perspective view illustrating the fixing method for the coupling member in the coupling structure of the wiper arm of Embodiment 1. FIG. 9 is a perspective view partially illustrating an engagement structure of the coupling member and a blade holding member in the coupling structure of the wiper arm of Embodiment 1.

When the adaptor 13 is mounted in the arm shank 12 of the wiper arm 22, first, as illustrated in FIG. 8, a fixture 17 is mounted in accordance with a position where the adaptor 13 is fixed inside the arm shank 12. In this state, the adaptor 13 is mounted from the opening part below the arm shank 12 (P1 part in FIG. 8), and the right and left extended portions 13b of the adaptor 13 are guided by the rail portions 12b on the lower stage side (upper stage side in FIG. 8) provided on the inner wall surfaces 12a of the arm shank 12. At this time, the extended portions 13b of the adaptor 13 are slidably moved on the rail portions 12b. Moreover, the fixture 17 sets the position of the adaptor 13 in the longitudinal direction X of the arm shank 12 by causing the adaptor 13 to butt the fixture 17. In this state, as indicated with N parts in FIG. 7, the rail portions 12b of the arm shank 12 and the extended portions (portion) 13b of the adaptor 13 are fixed to each other through thermal caulking.

That is, the extended portions 13b of the adaptor 13 and the rail portions 12b of the arm shank 12 are welded through thermal caulking processing, and the adaptor 13 is fixed at a desired position in the longitudinal direction X of the arm shank 12. Accordingly, weld portions are formed in the N parts.

After welding, the fixture 17 is detached from the arm shank 12.

As illustrated in FIG. 9, the blade holding member 14 is attached to the adaptor 13 which has been attached to the arm shank 12. At this time, the wiper blade 10 having the blade rubber 20 is mounted in the blade holding member 14. When the blade holding member 14 is attached to the adaptor 13, projection portions 14a of the blade holding member 14 are fitted into the cut-out portions 13c of the adaptor 13. Accordingly, the blade holding member 14 engages with the adaptor 13. At this time, since the projection portion 14a of the blade holding member 14 and the cut-out portion 13c of the adaptor 13 have a circular shape, the blade holding member 14 is attached pivotably with respect to the adaptor 13.

Here, materials for forming the arm shank 12, the adaptor 13, and the blade holding member 14 will be described. As an example, the arm shank 12 is formed of polyethylene terephthalate (PET). As an example, the adaptor 13 is formed of polybutylene terephthalate (PBT). As an example, the blade holding member 14 is formed of polyacetal (POM). However, the materials for the foregoing members are not limited to the materials described above.

According to the coupling structure of the wiper arm 22 of Embodiment 1, since the coupling structure includes the adaptor 13 to connect the arm shank 12 of the wiper arm 22 and the blade holding member 14, the adaptor 13 can be fixed at a plurality of places in the longitudinal direction X of the arm shank 12.

Accordingly, it is possible to realize the wiper arm 22 of one kind which can be attached to the wiper blades 10 of a plurality of types having different lengths. That is, it is possible to provide a coupling structure of the wiper arm 22 which is applicable to the wiper blades 10 of a plurality of types having different lengths.

In addition, in the coupling member of the wiper arm 22 of Embodiment 1, since the adaptor 13 can be fixed at an arbitrary position in the longitudinal direction X of the arm shank 12, the blade holding member 14 can be fixed at an arbitrary place in the longitudinal direction X of the arm shank 12. That is, the wiper blade 10 can be fixed to the arm shank 12 at any position.

In addition, in the coupling structure of the wiper arm 22 of Embodiment 1, since the coupling structure includes the adaptor 13 to connect the arm shank 12 of the wiper arm 22 and the blade holding member 14, the structure of the arm shank 12 can be a simple structure. Specifically, the structure of the wiper arm 22 on the shank side can be a simple structure by providing the adaptor side with accuracy of a sliding part in the coupling structure of the wiper arm 22. That is, in order to enhance the oscillation accuracy of the arm shank 12, the processing accuracy of the adaptor 13 itself may be further enhanced. It becomes no longer necessary for the arm shank 12 to have enhanced processing accuracy more than necessary by enhancing the processing accuracy of the adaptor 13, so that the structure of the arm shank 12 can be an easy structure. In addition, when the arm shank 12 is processed through molding, since the arm shank 12 has an easy structure, the arm shank 12 can be easily formed through molding. Moreover, the adaptor 13 can also be formed of a material having high sliding properties, so that the reliability of the unit of the wiper arm 22 including the adaptor 13 can be maintained for a long time.

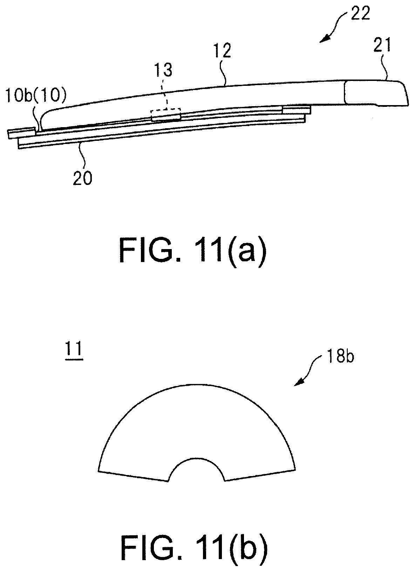

Here, FIG. 10(a) is a perspective view of the wiper arm 22 having a long wiper blade 10a, and FIG. 10(b) is a plan view illustrating a wiping region 18a of the wiper blade 10a in FIG. 10(a). In addition, FIG. 11(a) is a perspective view of the wiper arm 22 having a short wiper blade 10b, and FIG. 11(b) is a plan view illustrating a wiping region 18b of the wiper blade 10b in FIG. 11(a).

Since the wiper blade 10a illustrated in FIGs. 10(a) and 10(b) has a longer length than the wiper blade 10b illustrated in FIG. 11, regarding the areas of the wiping regions 18a and 18b in the rear glass 11, the area of the wiping region 18a wiped by the wiper blade 10a is larger than the area of the wiping region 18b wiped by the wiper blade 10b.

It is possible to realize the wiper arm 22 of one kind which can be attached to the wiper blades 10 having different lengths by employing the coupling structure of the wiper arm 22 of Embodiment 1.

In addition, according to the coupling structure of the wiper arm 22 of Embodiment 1, the position of the wiper blade 10 can be freely changed in accordance with the layout of the components based on variations in length of the wiper blade 10. Accordingly, the wiper arm 22, the adaptor 13, and the blade holding member 14 can become standard components.

In addition, since the rail portions (coupling engagement portion) 12b of the arm shank 12 are continuously formed in the longitudinal direction X of the arm shank 12, an optimal attachment position for the wiper blade 10 can be set in accordance with the type of automobile.

In addition, since the arm shank 12 and the adaptor 13 are fixed to each other through thermal caulking, the fixing position of the adaptor 13 is not misaligned and deterioration in workability for a user can be prevented when the wiper blade 10 is replaced or the like. Moreover, since a member such as a screw is not used for fixing the adaptor 13 to the arm shank 12, increase in the number of components can be curbed.

### (Embodiment 2)

A coupling structure of a wiper arm of Embodiment 2 will be described. Similar to Embodiment 1, for example, the coupling structure of the wiper arm of Embodiment 2 forms a rear wiper apparatus (not illustrated) wiping the wiping surface of the rear glass 11 (illustrated in FIG. 10) provided in a vehicle such as an automobile.

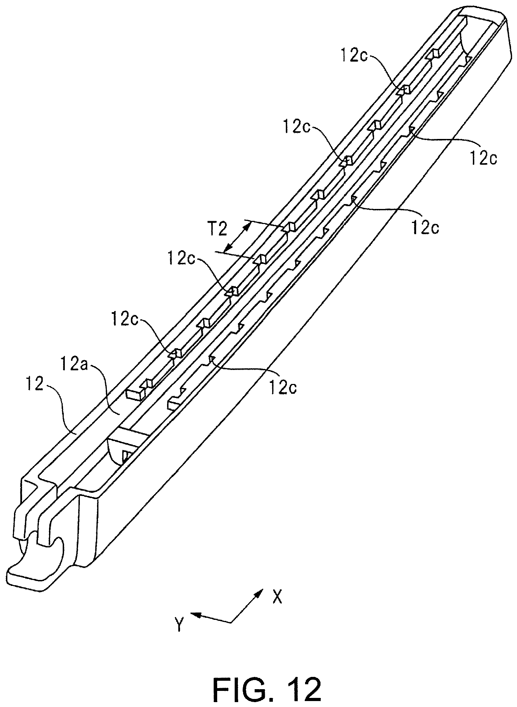

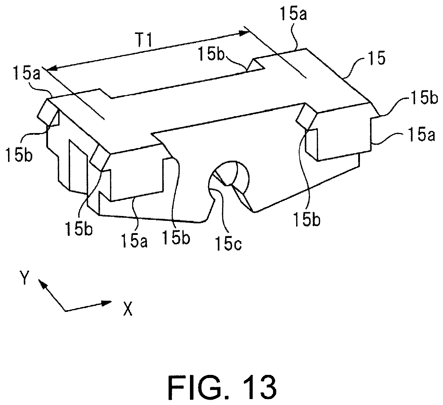

In addition, the coupling structure of the wiper arm of Embodiment 2 uses the arm shank 12 illustrated in FIG. 12 and an adaptor (coupling member) 15 illustrated in FIG. 13 in the coupling structure of the wiper arm 22 illustrated in FIG. 1. Since the operation method for the wiper arm 22 (refer to FIG. 1) is similar to the operation method for the wiper arm 22 of Embodiment 1, description thereof will be omitted.

In the coupling structure of the wiper arm 22 of Embodiment 2, in the longitudinal direction X of the slender arm shank 12, the adaptor 15 can be fixed at a selective position in the longitudinal direction X thereof.

First, using FIG. 12, a structure of the wiper arm of Embodiment 2 will be described. FIG. 12 is a perspective view illustrating a structure of the arm shank in the wiper arm of Embodiment 2.

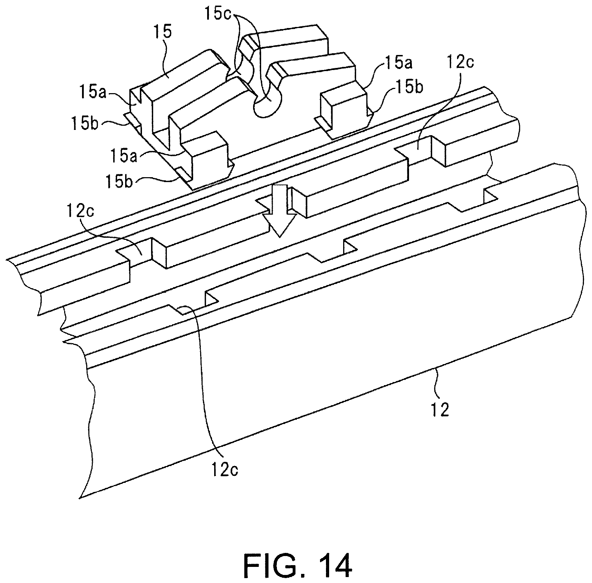

In the wiper arm 22 of Embodiment 2, similar to the structure of Embodiment 1 in FIG. 4, the shape of a cross section cut in the Y-direction orthogonal to the longitudinal direction X of the arm shank 12 is substantially a U-shape. The arm shank 12 includes a plurality of coupling engagement portions which can fix the adaptor 15, and the plurality of coupling engagement portions are provided with an interval therebetween in the longitudinal direction X of the arm shank 12. The plurality of coupling engagement portions engaging with the adaptor (coupling member) 15 illustrated in FIG. 13 (which will be described below) are formed on each of the pair of inner wall surfaces 12a of the arm shank 12 facing each other. As illustrated in FIG. 14 (which will be described below), the adaptor 15 is mounted from the U-shaped opening side, and the adaptor 15 is fixed to any of the plurality of coupling engagement portions.

The coupling engagement portions of the wiper arm 22 of Embodiment 2 are a plurality of recess portions 12c formed on the (pair of) inner wall surfaces 12a on both sides of the arm shank 12 as illustrated in FIG. 12. The plurality of recess portions 12c are formed in the longitudinal direction X of the arm shank 12. When viewed from the U-shaped opening side of the arm shank 12, unevenness is formed at equal intervals on each of the inner wall surfaces 12a on both sides. In other words, the plurality of recess portions 12c are formed at equal intervals on each of the inner wall surfaces 12a. Extended portions (protruding portions) 15a of the adaptor 15 illustrated in FIG. 13 (which will be described below) are fitted into (accommodated in) these recess portions 12c. Therefore, in Embodiment 2, the recess portions 12c of the arm shank 12 and the extended portions 15a which are the protruding portions of the adaptor 15 are fitted to each other, and the adaptor 15 is fixed to the arm shank 12 due to this fitting.

In addition, since the extended portions (protruding portions) 15a of the adaptor 15 are fitted into the plurality of recess portions 12c, an interval T1 between the extended portions 15a of the adaptor 15 and a distance T2 between the recess portions 12c adjacent to each other in the arm shank 12 are equal to each other (T1=T2). It is preferable that all of the installation intervals between the plurality of recess portions 12c in the arm shank 12 be equal to T1. That is, all of the installation intervals between the plurality of recess portions 12c in the arm shank 12 (distances T2 between the recess portions 12c) are provided to be equal intervals. At this time, due to the relationship of T2=T1, the adaptor 15 can be fitted into the recess portion 12c at any position of the plurality of recess portions 12c. When the plurality of recess portions 12c are provided at equal intervals, the interval T1 between the recess portions 12c adjacent to each other is 20 mm, for example. In addition, as illustrated in FIG. 12, on each of the inner wall surfaces 12a of the arm shank 12 facing each other, the recess portions 12c are provided at the same positions facing each other. Accordingly, the adaptor 15 can be mounted in any recess portion 12c as illustrated in FIG. 14 (which will be described below).

Next, a structure of the adaptor (coupling member) 15 of Embodiment 2 will be described using FIG. 13. FIG. 13 is a perspective view illustrating a coupling member embedded in the coupling structure of the wiper arm of Embodiment 2.

The adaptor 15 illustrated in FIG. 13 engages with the arm shank 12 illustrated in FIG. 12 and is fixed at a selective position in the longitudinal direction X of the arm shank 12. That is, as illustrated in FIG. 14 (which will be described below), the position of the adaptor 15 can be determined and fixed with respect to the arm shank 12 by inserting the extended portions 15a of the adaptor 15 into any pair of the plurality of recess portions 12c of the arm shank 12 and mounting the adaptor 15.

In the adaptor 15, the extended portion (protruding portion) 15a is provided at four corners two each on both side surfaces thereof. Moreover, both ends of each extended portion 15a include a claw portion 15b protruding from the extended portion 15a along the side surface.

In addition, in the adaptor 15, a circular cut-out portion 15c is formed below central parts on both side surfaces thereof. The blade holding member 14 holding the wiper blade 10 illustrated in FIG. 1 is pivotably fitted into these cut-out portions 15c.

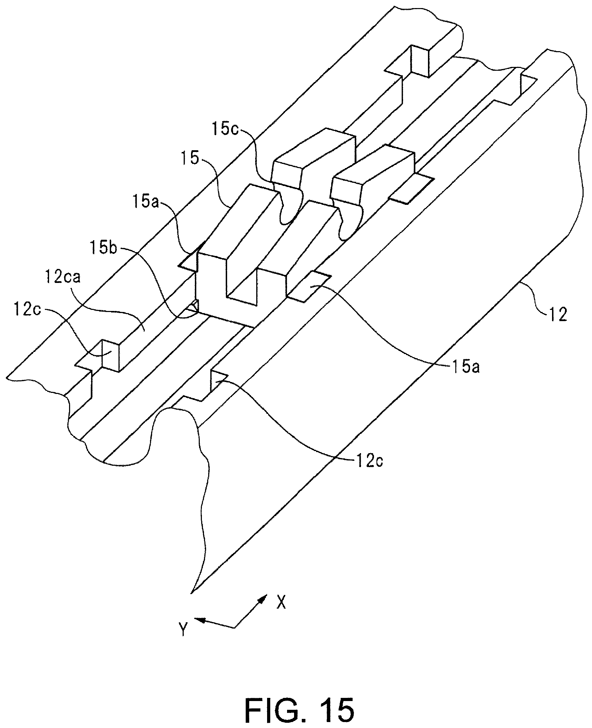

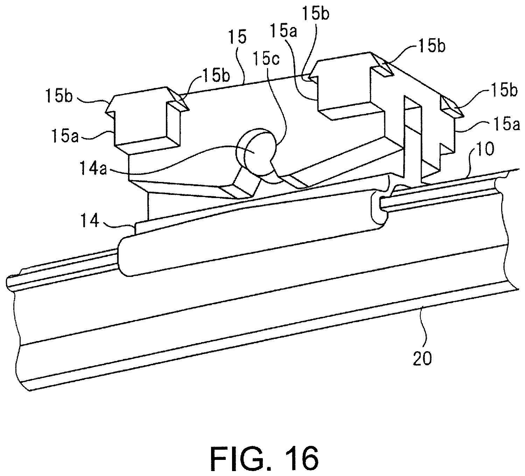

Next, a mounting method for the adaptor 15 with respect to the arm shank 12, and a structure after a wiper blade is attached will be described using FIGS. 14 to 16. FIG. 14 is a perspective view partially illustrating a mounting method for the coupling member in the coupling structure of the wiper arm of Embodiment 2. FIG. 15 is a perspective view partially illustrating details of a mounting structure of the coupling member of Embodiment 2. FIG. 16 is a perspective view partially illustrating an engagement structure of the coupling member and a blade holding member in the coupling structure of the wiper arm of Embodiment 2.

When the adaptor 15 is mounted in the arm shank 12, as illustrated in FIG. 14, in a state where the opening side of the arm shank 12 is directed upward, four extended portions 15a of the adaptor 15 are fitted into the recess portions 12c at predetermined places in the arm shank 12. At this time, as illustrated in FIG. 15, the adaptor 15 is reliably pressed until the claw portions 15b of the adaptor 15 are hooked at wall portions 12ca forming the recess portions 12c. When the adaptor 15 is pressed into the recess portions 12c, the adaptor 15 may butt inner side surfaces of the arm shank 12. Accordingly, the claw portions 15b can be more reliably hooked at the wall portions 12ca.

Consequently, the extended portions 15a of the adaptor 15 are disposed (accommodated) in the recess portions 12c of the arm shank 12, and the claw portions 15b of the adaptor 15 engage with the wall portions 12ca forming the recess portions 12c, so that the position of the adaptor 15 is set and the adaptor 15 is in a state of being fixed to the arm shank 12. That is, position setting and attachment of the adaptor 15 with respect to the arm shank 12 are completed.

As illustrated in FIG. 16, the blade holding member 14 is attached to the adaptor 15 which has been attached to the arm shank 12. At this time, the wiper blade 10 having the blade rubber 20 is mounted in the blade holding member 14. When the blade holding member 14 is attached to the adaptor 15, the projection portions 14a of the blade holding member 14 are fitted into the cut-out portions 15c of the adaptor 15. Accordingly, the blade holding member 14 engages with the adaptor 15. At this time, since the projection portion 14a of the blade holding member 14 and the cut-out portion 15c of the adaptor 15 have a circular shape, the blade holding member 14 is attached pivotably with respect to the adaptor 15.

Since materials for forming the arm shank 12, the adaptor 15, and the blade holding member 14 are similar to those described in Embodiment 1, duplicated description thereof will be omitted.

According to the coupling structure of the wiper arm 22 of Embodiment 2, since the coupling structure includes the adaptor 15 to connect the arm shank 12 of the wiper arm 22 and the blade holding member 14, the adaptor 15 can be fixed at a plurality of places in the longitudinal direction X of the arm shank 12. That is, since a plurality of fixing places for the adaptor 15 are provided in the arm shank 12, the adaptor 15 can be fixed at a selective position in the longitudinal direction X of the arm shank 12.

Accordingly, it is possible to realize the wiper arm 22 of one kind which can be attached to the wiper blades 10 of a plurality of types having different lengths. That is, it is possible to provide a coupling structure of the wiper arm 22 which is applicable to the wiper blades 10 of a plurality of types having different lengths.

In addition, in the coupling structure of the wiper arm 22 of Embodiment 2, similar to Embodiment 1, since the coupling structure includes the adaptor 15 to connect the arm shank 12 of the wiper arm 22 and the blade holding member 14, the structure of the arm shank 12 can be a simple structure. Specifically, the structure of the wiper arm 22 on the shank side can be a simple structure by providing the adaptor side with accuracy of a sliding part in the coupling structure of the wiper arm 22. That is, in order to enhance the oscillation accuracy of the arm shank 12, the processing accuracy of the adaptor 15 itself may be further enhanced. It becomes no longer necessary for the arm shank 12 to have enhanced processing accuracy more than necessary by enhancing the processing accuracy of the adaptor 15, so that the structure of the arm shank 12 can be an easy structure. In addition, when the arm shank 12 is processed through molding, since the arm shank 12 has an easy structure, the arm shank 12 can be easily formed through molding. Moreover, the adaptor 15 can also be formed of a material having high sliding properties, so that the reliability of the unit of the wiper arm 22 including the adaptor 15 can be maintained for a long time.

In addition, according to the coupling structure of the wiper arm 22 of Embodiment 2, the position of the wiper blade 10 can be selectively changed in accordance with the layout of the components based on variations in length of the wiper blade 10. Accordingly, the wiper arm 22, the adaptor 15, and the blade holding member 14 can become standard components.

In addition, since a plurality of fixing places for the adaptor 15 are formed in the longitudinal direction X of the arm shank 12, an optimal attachment position for the wiper blade 10 (adaptor 15) can be set in accordance with the type of automobile.

In addition, due to unevenness engagement between the arm shank 12 and the adaptor 15, attachment work of the adaptor 15 with respect to the arm shank 12 can be easily performed.

In addition, since the arm shank 12 and the adaptor 15 are fixed to each other through claw fixing by being fitted to each other, the fixing position of the adaptor 15 is not misaligned and deterioration in workability for a user can be prevented when the wiper blade 10 is replaced or the like. Moreover, since a member such as a screw is not used for fixing the adaptor 15 to the arm shank 12, increase in the number of components can be curbed.

### (Embodiment 3)

A coupling structure of a wiper arm of Embodiment 3 will be described. Similar to Embodiment 1, for example, the coupling structure of the wiper arm of Embodiment 3 forms a rear wiper apparatus (not illustrated) wiping the wiping surface of the rear glass 11 (illustrated in FIG. 10) provided in a vehicle such as an automobile.

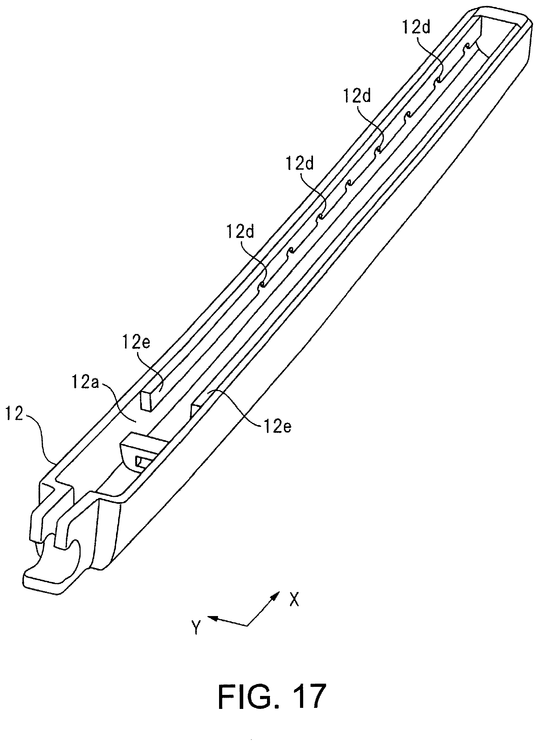

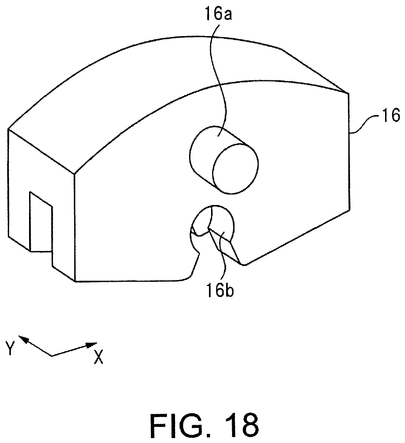

In addition, the coupling structure of the wiper arm of Embodiment 3 uses the arm shank 12 illustrated in FIG. 17 and an adaptor (coupling member) 16 illustrated in FIG. 18 in the coupling structure of the wiper arm 22 illustrated in FIG. 1. Since the operation method for the wiper arm 22 (refer to FIG. 1) is similar to the operation method for the wiper arm 22 of Embodiment 1, description thereof will be omitted.

In the coupling structure of the wiper arm 22 of Embodiment 3, in the longitudinal direction X of the slender arm shank 12, similar to Embodiment 2, the adaptor 16 can be fixed at a selective position in the longitudinal direction X of the arm shank 12.

First, using FIG. 17, a structure of the wiper arm 22 of Embodiment 3 will be described. FIG. 17 is a perspective view illustrating a structure of the arm shank of the wiper arm of Embodiment 3.

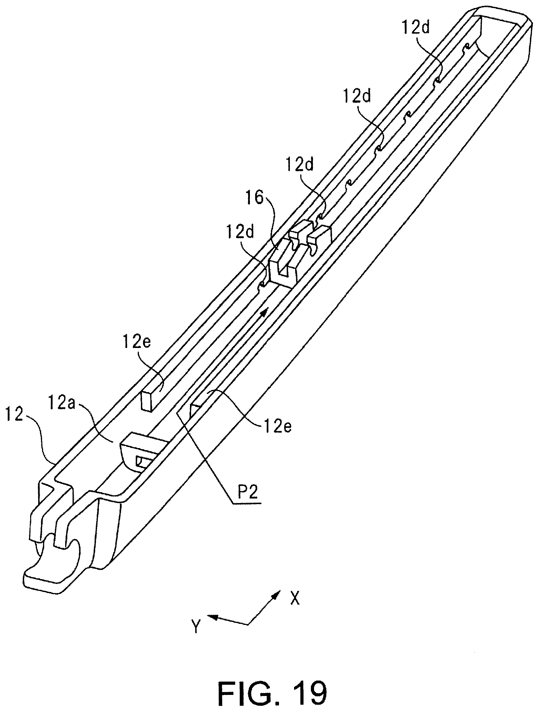

In the wiper arm 22 of Embodiment 3, similar to the structure of Embodiment 1 in FIG. 4, the shape of a cross section cut in the Y-direction orthogonal to the longitudinal direction X of the arm shank 12 illustrated in FIG. 17 is substantially a U-shape. The arm shank 12 includes a plurality of coupling engagement portions which can fix the adaptor 16, and the plurality of coupling engagement portions are provided with an interval therebetween in the longitudinal direction X of the arm shank 12. The plurality of coupling engagement portions engaging with the adaptor (coupling member) 16 illustrated in FIG. 18 (which will be described below) are formed on each of the pair of inner wall surfaces 12a of the arm shank 12 of the wiper arm 22 facing each other. As illustrated in FIG. 19 (which will be described below), the adaptor 16 is mounted from the U-shaped opening side (P2 part in FIG. 19), and the adaptor 16 is fixed to any of the plurality of coupling engagement portions.

The coupling engagement portions of the wiper arm 22 of Embodiment 3 are a plurality of circular recess portions 12d formed on (pair of) the inner wall surfaces 12a on both sides of the arm shank 12 as illustrated in FIG. 17. Specifically, the plurality of circular recess portions 12d are formed at equal intervals, for example, near the upper end (near the lower end in FIG. 17) of a slide rail 12e formed to protrude inward from the inner wall surface 12a in the longitudinal direction X of the arm shank 12. That is, the slide rail 12e formed to protrude from the inner wall surface 12a, and the plurality of recess portions 12d formed at equal intervals near the upper end of the slide rail 12e are formed such that they communicate with each other.

The protruding portions 16a of the adaptor 16 illustrated in FIG. 18 (which will be described below) are fitted into any pair of these plurality of recess portions 12d. Accordingly, the position of the adaptor 16 is set with respect to the arm shank 12 and is fixed to the arm shank 12. Therefore, in Embodiment 3 as well, the recess portions 12d of the arm shank 12 and the protruding portions 16a of the adaptor 16 are fitted to each other, and the adaptor 16 is fixed to the arm shank 12 due to this fitting.

Next, a structure of the adaptor (coupling member) 16 of Embodiment 3 will be described using FIG. 18. FIG. 18 is a perspective view illustrating a coupling member embedded in the coupling structure of the wiper arm of Embodiment 3.

The adaptor 16 illustrated in FIG. 18 engages with the arm shank 12 illustrated in FIG. 17 and is fixed at a selective position in the longitudinal direction X of the arm shank 12. On both side surfaces, the adaptor 16 includes the protruding portion 16a protruding from each of the side surfaces. The protruding portion 16a has a columnar shape. As illustrated in FIG. 19 (which will be described below), the adaptor 16 is mounted from the opening part below the arm shank 12 (P2 part in FIG. 19), and the right and left protruding portions 16a are guided by the slide rails 12e provided on the inner wall surfaces 12a of the arm shank 12. Moreover, the position of the adaptor 16 can be determined and fixed with respect to the arm shank 12 by causing the protruding portions 16a of the adaptor 16 to be fitted (press-fitted) into the recess portions 12d at desired positions.

In the adaptor 16, a circular cut-out portion 16b is formed below the protruding portions 16a on both side surfaces thereof. The blade holding member 14 holding the wiper blade 10 illustrated in FIG. 1 is pivotably fitted into these cut-out portion 16b.

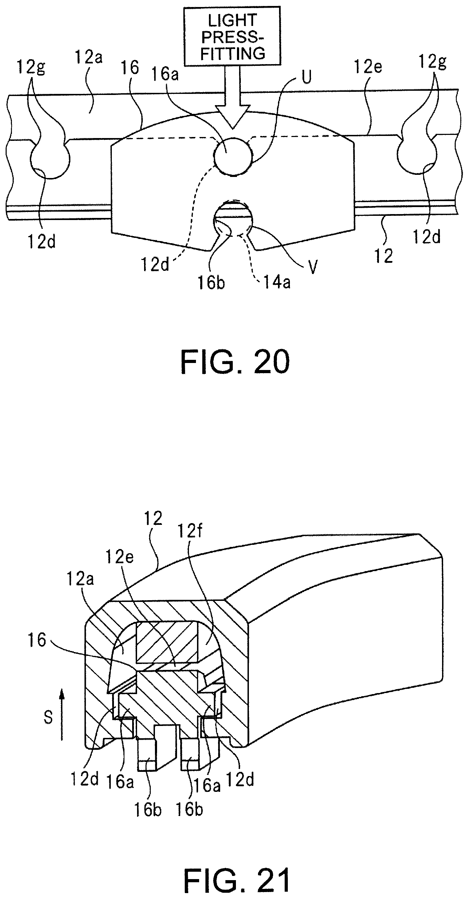

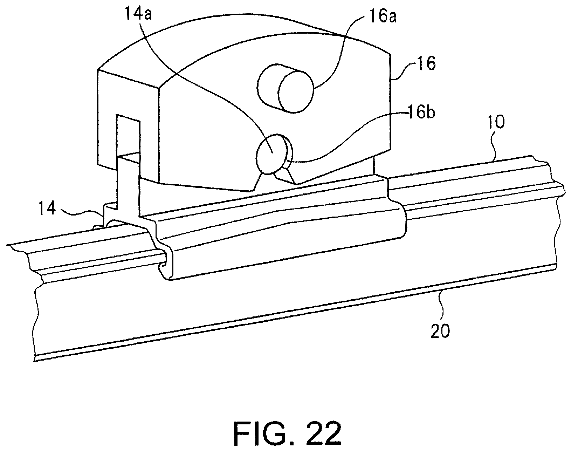

Next, a mounting method for the adaptor 16 with respect to the arm shank 12, and a structure after a wiper blade is attached will be described using FIGS. 19 to 22. FIG. 19 is a perspective view illustrating a mounting method for the coupling member in the coupling structure of the wiper arm of Embodiment 3. FIG. 20 is a side view partially illustrating a press-fitting method for the coupling member of Embodiment 3. In addition, FIG. 21 is a perspective view partially illustrating a partially broken structure after the coupling member of Embodiment 3 is mounted. FIG. 22 is a perspective view partially illustrating an engagement structure of the coupling member and a blade holding member in the coupling structure of the wiper arm of Embodiment 3.

When the adaptor 16 is mounted in the arm shank 12, as indicated with the P2 part in FIG. 19, in a state where the opening side of the arm shank 12 is directed upward, the adaptor 16 is inserted into the arm shank 12. Thereafter, the adaptor 16 is moved along the slide rails 12e, and the protruding portions 16a are fitted into the recess portions 12d at desired positions as illustrated in FIG. 20. That is, the protruding portions 16a of the adaptor 16 are lightly press-fitted into the recess portions 12d at desired positions in the arm shank 12. That is, the protruding portions 16a of the adaptor 16 and the recess portions 12d of the arm shank 12 engage with each other through press-fitting. Accordingly, the position of the adaptor 16 is set in the arm shank 12, and the adaptor 16 is in a state of being fixed to the arm shank 12.

At this time, it is preferable that the distance between opening portions 12g facing each other in the recess portion 12d be smaller than the diameter of the protruding portion 16a to the extent that the protruding portion 16a of the adaptor 16 is not easily detached even when a load is applied in a detachment direction.

As illustrated in FIG. 21, in a ceiling part between the inner wall surfaces 12a of the arm shank 12, a stopper portion 12f protruding inward from this ceiling part is provided. This stopper portion 12f prevents the adaptor 16 from falling off inside the arm shank 12 during wiping in which the wiper arm 22 operates. Therefore, a gap between the stopper portion 12f and the adaptor 16 is a small gap to the extent that the adaptor 16 does not fall off. That is, since the stopper portion 12f is provided in the ceiling part between the inner wall surfaces 12a of the arm shank 12, it is possible to prevent the adaptor 16 from falling off the recess portions 12d when a load in an S-direction is applied to the adaptor 16 during wiping. This stopper portion 12f may be a member which is detachably attached using an adhesive material or the like after the adaptor 16 is mounted and may be a member which is integrally formed with the arm shank 12. In addition, the stopper portion 12f may be provided to protrude from the side surfaces of the inner wall surfaces 12a of the arm shank 12.

Next, as illustrated in FIG. 22, the blade holding member 14 is attached to the adaptor 16 which has been attached to the arm shank 12. At this time, the wiper blade 10 having the blade rubber 20 is mounted in the blade holding member 14. When the blade holding member 14 is attached to the adaptor 16, the projection portions 14a of the blade holding member 14 are fitted into the cut-out portions 16b of the adaptor 16. Accordingly, the blade holding member 14 engages with the adaptor 16. At this time, since the projection portion 14a of the blade holding member 14 and the cut-out portion 16b of the adaptor 16 have a circular shape, the blade holding member 14 is attached pivotably with respect to the adaptor 16.

Since materials for forming the arm shank 12, the adaptor 16, and the blade holding member 14 are similar to those described in Embodiment 1, duplicated description thereof will be omitted.

According to the coupling structure of the wiper arm 22 of Embodiment 3, since the coupling structure includes the adaptor 16 to connect the arm shank 12 of the wiper arm 22 and the blade holding member 14, the adaptor 16 can be fixed at a plurality of places in the longitudinal direction X of the arm shank 12. That is, since a plurality of fixing places for the adaptor 16 are provided in the arm shank 12, the adaptor 16 can be fixed at a selective position in the longitudinal direction X of the arm shank 12.

Accordingly, it is possible to realize the wiper arm 22 of one kind which can be attached to the wiper blades 10 of a plurality of types having different lengths. That is, it is possible to provide a coupling structure of the wiper arm 22 which is applicable to the wiper blades 10 of a plurality of types having different lengths.

In addition, in the wiper arm 22 of Embodiment 3, similar to Embodiment 1, since the coupling structure includes the adaptor 16 to connect the arm shank 12 of the wiper arm 22 and the blade holding member 14, the structure of the arm shank 12 can be a simple structure. Specifically, the structure of the wiper arm 22 on the shank side can be a simple structure by providing the adaptor side with accuracy of a sliding part in the coupling structure of the wiper arm 22. That is, in order to enhance the oscillation accuracy of the arm shank 12, the processing accuracy of the adaptor 16 itself may be further enhanced. It becomes no longer necessary for the arm shank 12 to have enhanced processing accuracy more than necessary by enhancing the processing accuracy of the adaptor 16, so that the structure of the arm shank 12 can be an easy structure. In addition, when the arm shank 12 is processed through molding, since the arm shank 12 has an easy structure, the arm shank 12 can be easily formed through molding. Moreover, the adaptor 16 can also be formed of a material having high sliding properties, so that the reliability of the unit of the wiper arm 22 including the adaptor 16 can be maintained for a long time.

In addition, according to the coupling structure of the wiper arm 22 of Embodiment 3, the position of the wiper blade 10 can be selectively changed in accordance with the layout of the components based on variations in length of the wiper blade 10. Accordingly, the arm shank 12, the adaptor 16, and the blade holding member 14 can become standard components.

In addition, since a plurality of fixing places for the adaptor 16 are formed in the longitudinal direction X of the arm shank 12, an optimal attachment position for the wiper blade 10(adaptor 16) can be set in accordance with the type of automobile.

In addition, due to engagement through light press-fitting between the arm shank 12 of the wiper arm 22 and the adaptor 16, attachment work of the adaptor 16 with respect to the arm shank 12 can be easily performed. Moreover, the fixing position of the adaptor 16 is not misaligned and deterioration in workability for a user can be prevented when the wiper blade 10 is replaced or the like. In addition, since a member such as a screw is not used for fixing the adaptor 16 to the arm shank 12, increase in the number of components can be curbed.

In addition, in the coupling structure of the wiper arm 22 of Embodiment 3, as indicated with a U part in FIG. 20, the adaptor 16 is pivotably attached to coupling parts between the arm shank 12 and the protruding portions 16a of the adaptor 16. Moreover, as indicated with a V part in FIG. 20, the blade holding member 14 is also pivotably attached for coupling between the cut-out portions 16b of the adaptor 16 and the projection portions 14a of the blade holding member 14 illustrated in FIG. 22.

In this manner, in the arm shank 12, since oscillation points are provided at two places close to each other, play of the blade holding member 14 increases, so that it is possible to enhance followability of the wiper blade 10 with respect to a curvature surface such as the rear glass 11 illustrated in FIG. 10, and it is possible to enhance wiping properties of the wiper arm 22.

The foregoing embodiments have described an example in which the coupling structure of the wiper arm 22 is applied to a rear wiper apparatus wiping the rear glass 11 of a vehicle such as an automobile. However, the disclosure is not limited thereto and can also be applied to a wiper apparatus installed on a front side of a vehicle such as an automobile, or a wiper apparatus installed in a watercraft, an aircraft, a railroad car, and the like.

### [Reference Signs List]

10, 10a, 10b Wiper blade
11 Rear glass
12 Arm shank
12a Inner wall surface
12b Rail portion (coupling engagement portion)
12c Recess portion (coupling engagement portion)
12d Recess portion (coupling engagement portion)
13 Adaptor (coupling member)
13a Protruding portion
13b Extended portion (portion)
13c Cut-out portion
14 Blade holding member
14a Projection portion
15 Adaptor (coupling member)
15a Extended portion (protruding portion)
15b Claw portion
15c Cut-out portion
16 Adaptor (coupling member)
16a Protruding portion
16b Cut-out portion
17 Fixture
20 Blade rubber
21 Arm head
22 Wiper arm

## Claims

1. A coupling structure of a wiper arm (22) coupled to a blade holding member (14) in an attachable/detachable manner on the wiper arm (22), the coupling structure comprising:
the wiper arm (22);
a coupling member (13) that is fixed to an arm shank (12) constituting the wiper arm (22);
and
the blade holding member (14) that engages with the coupling member (13) and holds a wiper blade (10),
wherein the coupling member (13) is positioned between the arm shank (12) and the blade holding member (14), and
wherein the arm shank (12) comprises a coupling engagement portion (12b) capable of fixing the coupling member (13) at any position in a longitudinal direction of the arm shank (12),
wherein the arm shank (12) comprises a pair of inner wall surfaces (12a) facing each other,
wherein the coupling engagement portion (12b) engaging with the coupling member (13) is formed on each of the inner wall surfaces (12a), and
wherein the coupling engagement portion (12b) is continuously connected in the longitudinal direction of the arm shank (12), the coupling structure being **characterized in that**
the coupling engagement portion (12b) is a rail portion protruding from the inner wall surface (12a) of the arm shank (12), and
wherein the coupling member (13) has a protruding portion (13a) engaging with the rail portion.

2. The coupling structure of a wiper arm (22) according to claim 1, wherein a weld portion (N) joining a portion of the coupling engagement portion (12b) and a portion of the coupling member (13) to each other is formed.

3. The coupling structure of a wiper arm (22) according to claim 1,
wherein the coupling member (13) comprises an extended portion (13b),
wherein the extended portion (13b) is disposed separately from the protruding portion (13a) with a gap therebetween, and
wherein the rail portion of the arm shank (12) is disposed between the protruding portion (13a) and the extended portion (13b) in the coupling member (13).

## Patentansprüche

1. Kupplungsstruktur eines Wischerarms (22), gekoppelt mit einem Blatt-Halteelement (14) in einer anbringbaren/abnehmbaren Weise an dem Wischerarm (22), wobei die Kupplungsstruktur umfasst:
den Wischerarm (22);
ein Kupplungselement (13), das an einem Armschaft (12) befestigt ist, der den Wischerarm (22) bildet; und
das Blatt-Halteelement (14), das mit dem Kupplungselement (13) in Eingriff steht und ein Wischerblatt (10) hält,
wobei das Kupplungselement (13) zwischen dem Armschaft (12) und dem Blatt-Halteelement (14) angeordnet ist, und
wobei der Armschaft (12) einen Kupplungseingriffsabschnitt (12b) umfasst, der in der Lage ist, das Kupplungselement (13) an irgendeiner Position in einer Längsrichtung des Armschafts (12) zu fixieren,
wobei der Armschaft (12) ein Paar von Innenwandflächen (12a) umfasst, die einander zugewandt sind,
wobei der Kupplungseingriffsabschnitt (12b), der mit dem Kupplungselement (13) in Eingriff steht, an jeder der Innenwandflächen (12a) ausgebildet ist, und
wobei der Kupplungseingriffsabschnitt (12b) in der Längsrichtung des Armschaftes (12) durchgehend verbunden ist, wobei die Kupplungsstruktur **dadurch gekennzeichnet ist, dass**
der Kupplungseingriffsabschnitt (12b) ein Schienenabschnitt ist, der von der Innenwandfläche (12a) des Armschafts (12) vorsteht, und
wobei das Kupplungselement (13) einen vorstehenden Abschnitt (13a) aufweist, der mit dem Schienenabschnitt in Eingriff steht.

2. Kupplungsstruktur eines Wischerarms (22) gemäß Anspruch 1, wobei ein Schweißabschnitt (N) ausgebildet ist, der einen Abschnitt des Kupplungseingriffsabschnitts (12b) und einen Abschnitt des Kupplungselements (13) miteinander verbindet.

3. Kupplungsstruktur eines Wischerarms (22) gemäß Anspruch 1,
wobei das Kupplungselement (13) einen verlängerten Abschnitt (13b) umfasst,
wobei der verlängerte Abschnitt (13b) getrennt von dem vorstehenden Abschnitt (13a) mit einem Spalt dazwischen angeordnet ist, und
wobei der Schienenabschnitt des Armschaftes (12) zwischen dem vorstehenden Abschnitt (13a) und dem verlängerten Abschnitt (13b) in dem Kupplungselement (13) angeordnet ist.

## Revendications

1. Structure de couplage d'un bras d'essuie-glace (22) couplé à un élément de maintien de lame (14) d'une manière rattachable/amovible sur le bras d'essuie-glace (22), la structure de couplage comprenant:
le bras d'essuie-glace (22);
un élément de couplage (13) qui est fixé à une tige de bras (12) constituant le bras d'essuie-glace (22); et
l'élément de maintien de lame (14) qui vient en prise avec l'élément de couplage (13) et maintient un balai d'essuie-glace (10),
dans lequel l'élément de couplage (13) est positionné entre la tige de bras (12) et l'élément de maintien de lame (14), et
dans lequel la tige de bras (12) comprend une partie de mise en prise d'accouplement (12b) capable de fixer l'élément d'accouplement (13) à n'importe quelle position dans une direction longitudinale de la tige de bras (12),
dans laquelle la tige de bras (12) comprend une paire de surfaces de paroi intérieure (12a) se faisant face,
dans lequel la partie de mise rn prise d'accouplement (12b) venant en prise avec avec l'élément d'accouplement (13) est formée sur chacune des surfaces de paroi intérieure (12a), et
dans lequel la partie de mise en prise de couplage (12b) est raccordée en continu dans la direction longitudinale de la tige de bras (12), la structure de couplage étant **caractérisée en ce que** la partie de mise en prise de couplage (12b) est une partie de rail dépassant de la surface de paroi intérieure (12a) de la tige de bras (12), et
dans lequel l'élément de couplage (13) a une partie protubérante (13a) venant en prise avec la partie de rail.

2. Structure de couplage d'un bras d'essuie-glace (22) selon la revendication 1, dans laquelle une partie de soudure (N) joignant une partie de la partie de mise en prise de couplage (12b) et une partie de l'élément de couplage (13) l'une à l'autre est formée.

3. Structure de couplage d'un bras d'essuie-glace (22) selon la revendication 1, dans laquelle l'élément de couplage (13) comprend une partie étendue (13b), dans laquelle la partie étendue (13b) est disposée séparément de la partie saillante (13a) avec un espace entre eux, et dans laquelle la partie de rail de la tige de bras (12) est disposée entre la partie protubérante (13a) et la partie étendue (13b) dans l'élément de couplage (13).
